# FASCICULE DE BREVET EUROPEEN

(11) **EP 4 603 317 B1**
(45) Date de publication et mention de la délivrance du brevet: **18.11.2026**
(21) Numéro de dépôt: 25157855.5
(22) Date de dépôt: 14.02.2025
(51) Int. Cl.: B60K 35/10, B60K 35/22, B60K 37/20

(54) **ELÉMENT DE GARNISSAGE COMPRENANT UNE INTERFACE TACTILE MODULABLE**
PACKUNGSELEMENT MIT MODULIERBARER BERÜHRUNGSSCHNITTSTELLE
TRIM ELEMENT COMPRISING A MODULATABLE TACTILE INTERFACE

(30) Priorité: 14.02.2024 FR 2401419
(43) Date de publication de la demande: 20.08.2025
(73) Titulaire: Faurecia Intérieur Industrie, 92000 Nanterre (FR)
(72) Inventeur: RAYAR, Fernandez, 60000 BEAUVAIS (FR)
(74) Mandataire: Novagraaf Group

(56) Documents cités:
- FR-A1- 3 133 793
- US-A1- 2014 300 648
- US-A1- 2020 192 466
- US-A1- 2022 121 297

## Description

La présente invention concerne un élément de garnissage du type comprenant au moins un dispositif de génération d'images, au moins un élément d'affichage définissant au moins une surface d'affichage, et au moins un capteur agencé pour détecter un contact sur la surface d'affichage, le dispositif de génération d'images étant agencé pour projeter au moins une image sur au moins une zone d'affichage de la surface d'affichage. Un élément de garnissage de véhicule, représentant l'état de la technique, est connu du document US 2020/192466 A1.

Les véhicules de transport de passagers proposent aux utilisateurs un grand nombre de fonctions pour modifier certains paramètres liés au véhicule, tels que les conditions climatiques internes, l'éclairage à l'intérieur de véhicule, ou encore la gestion de paramètres multimédias.

Cependant, l'augmentation du nombre de ces fonctions entraîne une augmentation de la charge cognitive pour l'utilisateur, notamment pour le conducteur du véhicule, qui doit, en plus de surveiller la conduite du véhicule, s'occuper de la gestion de ces fonctions.

En effet, chaque fonction est généralement associée à un ou plusieurs boutons ou molettes, sur la planche de bord du véhicule par exemple, avec lesquels l'utilisateur doit interagir afin de piloter ladite fonction, ou encore associée à une surface tactile avec laquelle l'utilisateur peut interagir par contact.

Dans le cas où une surface d'affichage tactile est utilisée en combinaison d'un dispositif de projection d'image, tel qu'un écran, qui projette des images sur la surface d'affichage, il est connu de graver ou d'imprimer sur la surface d'affichage des icônes représentant les fonctions du véhicule à piloter.

En regard de chaque icône gravée, un capteur de force ou un capteur capacitif est installé de manière à détecter un appui ou un contact de l'utilisateur sur l'icône et ainsi déclencher le pilotage de la fonction associée.

Toutefois, le gravage des icônes sur la surface d'affichage peut endommager la surface d'affichage et ainsi de détériorer la qualité de l'image affichée sur la surface d'affichage.

En outre, une fois l'icône gravée sur la surface d'affichage, elle est fixée dans une position et avec une dimension non modulable, qui ne prend pas en compte la configuration du véhicule ni les besoins courants de l'utilisateur.

L'un des buts de l'invention est alors de proposer un élément de garnissage permettant de faciliter le pilotage des fonctions du véhicule pour l'utilisateur, en fonction de la configuration du véhicule et/ou des besoins de l'utilisateur.

A cet effet, l'invention a pour objet un élément de garnissage comprenant un dispositif de commande agencé pour rendre activable par contact une zone d'activation de la surface d'affichage pour le pilotage d'au moins une fonction associée à l'image projetée sur la zone d'affichage, la zone d'activation comprenant au moins la zone d'affichage, le capteur étant agencé hors de la zone d'affichage, le dispositif de commande étant en outre agencé pour rendre inactivable par contact la surface d'affichage en dehors de la zone d'activation, le dispositif de commande pilotant la fonction associée à l'image projetée sur la zone d'affichage lorsque le capteur détecte un contact sur la zone d'activation comprenant ladite zone d'affichage.

Le dispositif de commande étant apte à rendre activable par contact une ou plusieurs zones d'activations sur la surface d'affichage en fonction des images projetées par le dispositif de génération d'image, et de rendre inactivable par contact le reste de la surface d'affichage, il est possible d'obtenir une surface d'affichage tactile modulable en fonction des images projetées par le dispositif de génération d'image et ainsi proposer une pluralité de configurations d'accessibilité pour le pilotage de différentes fonctions pilotées par le dispositif de commande.

Ainsi, en fonction des besoins spécifiques de l'utilisateur ou de la configuration du véhicule, des images (par exemple des icônes représentant une fonction du véhicule à piloter) sont projetées sur la surface d'affichage, et chaque zone d'activation, avec laquelle l'utilisateur peut interagir, présente une position et une dimension modulable et adaptable dans le temps.

Le pilotage des fonctions du véhicule par l'utilisateur est alors simplifié, et permet à l'utilisateur de réduire la charge cognitive impliquée par le pilotage des fonctions du véhicule.

Suivant d'autres aspects avantageux de l'invention, l'élément de garnissage comprend une ou plusieurs des caractéristiques suivantes, prises isolément ou suivant toutes les combinaisons techniquement possibles :
- la zone d'activation comprend également une zone périphérique entourant la zone d'affichage, la zone périphérique présentant par exemple une aire comprise entre 1,1 fois et 1,5 fois l'aire de la zone d'affichage qu'elle entoure ;
- le dispositif de génération d'images est agencé pour projeter une pluralités d'images sur des zones d'affichages distinctes de la surface d'affichage, le dispositif de commande étant agencé pour rendre activable par contact une pluralité de zones d'activation de la surface d'affichage pour le pilotage de fonctions associées aux images projetées sur les zones d'affichage distinctes, le dispositif de commande étant en outre agencé pour rendre inactivable par contact la surface d'affichage en dehors de chaque zone d'activation ;
- le dispositif de commande calcule la position de la zone d'activation sur la surface d'affichage en fonction de la position de l'image générée sur un écran du dispositif de génération d'image ;
- l'élément d'affichage présente une surface externe définissant la surface d'affichage et une surface interne opposée à la surface externe, le capteur étant disposé sur au moins une partie de la surface interne de l'élément d'affichage ;
- le capteur est disposé en périphérie de la surface interne de l'élément d'affichage ;
- la partie de la surface interne de l'élément d'affichage recevant le capteur représente entre 5 % et 10 % de la surface totale de la surface d'affichage ;
- l'élément de garnissage comprend un masque opaque disposé entre le capteur et l'élément d'affichage, au moins en regard du capteur, le masque étant agencé pour occulter le capteur depuis l'extérieur de l'élément de garnissage ;
- le dispositif de génération d'image est apte à projeter au moins une image dynamique, dont les caractéristiques dépendent de caractéristiques relatives au fonctionnement du véhicule et/ou à l'utilisateur, la zone d'activation étant liée, par la zone d'affichage, auxdites caractéristiques relatives au fonctionnement du véhicule et/ou à l'utilisateur ; et
- l'élément d'affichage est une lame semi-réfléchissante au moins en partie translucide, au moins une partie des images projetées par le dispositif de génération d'images et réfléchies par la surface d'affichage se formant derrière la surface d'affichage, sous forme d'image virtuelle.

L'invention concerne également un procédé d'utilisation d'un élément de garnissage tel que décrit ci-dessus, le procédé comprenant les étapes de :
- projection d'au moins une image par le dispositif de génération d'image sur au moins une zone d'affichage de la surface d'affichage,
- activation par le dispositif de commande de la zone d'activation pour la ou chaque zone d'affichage,
- désactivation par le dispositif de commande de la surface d'affichage en dehors de la ou chaque zone d'activation, et
- pilotage par le dispositif de commande de la fonction associée à l'image projetée sur la zone d'affichage lorsque le capteur détecte un contact sur la zone d'activation comprenant ladite zone d'affichage.

L'invention apparaîtra plus clairement à la lecture de la description qui va suivre, donnée uniquement à titre d'exemple non limitatif, et faite en référence aux dessins dans lesquels :
- la figure 1 est une représentation schématique en coupe d'un élément de garnissage selon l'invention, et
- la figure 2 est une représentation schématique de dessus de la surface d'affichage de l'élément de garnissage de la figure 1, sur laquelle sont projetées une pluralité d'images.

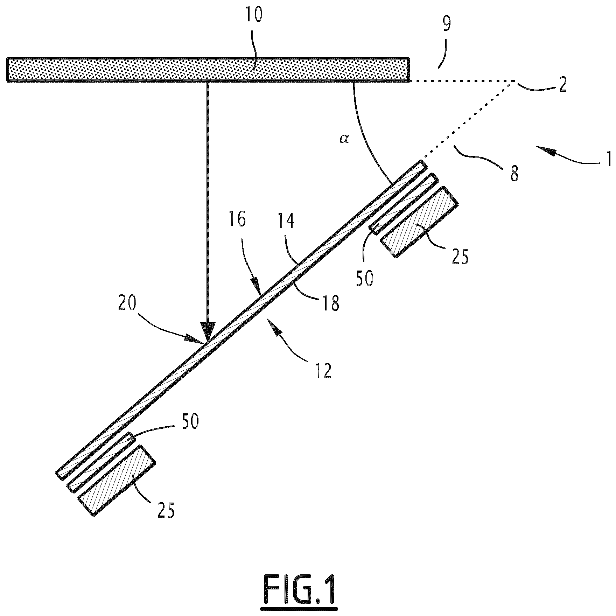

En référence à la figure 1, on décrit un élément de garnissage 1 de véhicule comprenant un corps 2. Un tel élément de garnissage 1 forme par exemple une partie d'une planche de bord de véhicule, d'une console centrale, d'un panneau de porte ou autre.

Le corps 2 est agencé pour conférer sa forme générale et ses caractéristiques mécaniques à l'élément de garnissage 1. Le corps 2 comprend au moins une première partie 8 qui s'étend dans une partie visible de l'habitacle de véhicule par au moins un occupant du véhicule.

Le corps 2 comprend par exemple une deuxième partie 9 s'étendant en regard d'au moins une partie de la première partie 8 du corps 2.

La deuxième partie 9 du corps 2 est espacée de ladite première partie 8, par exemple selon une direction d'élévation correspondant à la hauteur du véhicule.

Dans l'exemple représenté sur la figure 1, l'élément de garnissage 1 est une planche de bord et la première partie 8 correspond à une partie inférieure du corps 2 qui s'étend en regard des occupants avant d'un véhicule et sert de support à plusieurs éléments fonctionnels, tels qu'un panneau d'instrumentation, une boîte à gant, un système audio et/ou de climatisation, etc. La deuxième partie 9 est alors par exemple formée par un épaulement s'étendant en porte à faux au-dessus de la première partie 8. La première partie 8 et la deuxième partie 9 peuvent être venues de matière ou être formées par deux pièces distinctes.

Dans tout ce qui suit, les termes « interne » et « intérieur » désignent ce qui est tourné vers l'élément de l'habitacle du véhicule sur lequel est installé l'élément de garnissage 1 et les termes « externe » et « extérieur » désignent ce qui est tourné vers l'extérieur de l'élément de garnissage 1, c'est-à-dire vers l'habitacle du véhicule.

L'élément de garnissage 1 comprend un dispositif de génération d'images 10 et un élément d'affichage 12. L'élément d'affichage 12 présente une surface externe 14 définissant une surface d'affichage 16 visible et une surface interne 18 opposée à la surface externe 14.

Par surface visible, on entend une surface qui est visible par les occupants du véhicule lorsque l'élément de garnissage 1 est installé dans l'habitacle d'un véhicule.

Tel qu'il sera décrit plus en détails ultérieurement, le dispositif de génération d'images 10 est agencé pour projeter au moins une image sur la surface d'affichage 16. En d'autres termes, au moins une partie de la surface d'affichage 16 de l'élément d'affichage 12 définit au moins une zone d'affichage 20 sur laquelle des images issues du dispositif de génération d'images 10 sont projetées.

Chaque zone d'affichage 20 correspond à la région d'intersection du ou des faisceau(x) lumineux (formant l'image destinée à être projetée) émis par le dispositif de génération d'image 10 vers l'élément d'affichage 12, et la surface d'affichage 16.

Selon l'invention, le dispositif de génération d'images 10 s'étend à l'extérieur de la première partie 8 du corps 2. En d'autres termes, le dispositif de génération d'images 10 n'est pas placée « sous » l'élément d'affichage 12 en regard de la surface interne 18 de l'élément d'affichage 12 et les images émises par le dispositif de génération d'images 10 ne traversent pas l'élément d'affichage 12 comme c'est le cas lorsque le dispositif de génération d'images 10 est placé dans la première partie 8 du corps 2 afin de rétroéclairer la surface d'affichage 16.

En particulier, dans un exemple de réalisation, le dispositif de génération d'images 10 est solidaire de la deuxième partie 9 du corps 2 en regard de la surface d'affichage 16 de l'élément d'affichage 12.

Ainsi, lorsque l'élément de garnissage 1 est une planche de bord et que la première partie 8 est formée par une partie inférieure du corps 2, la deuxième partie 9 est par exemple formée par une partie supérieure du corps 2 séparée de la première partie 8 selon une direction d'élévation et s'étendant en porte-à-faux en regard de l'élément d'affichage 12, comme représenté sur la figure 1.

La direction d'élévation est par exemple une direction reliant le plancher du véhicule au toit du véhicule.

Le dispositif de génération d'images 10 est monté dans la deuxième partie 9 du corps 2 de sorte à être orienté comme souhaité par rapport à la surface externe 14 de l'élément d'affichage 12 afin que les images émises par le dispositif de génération d'images 10 soient dirigées vers la surface d'affichage 16 et réfléchies sur celle-ci vers l'oeil d'un occupant du véhicule assis en regard de la surface d'affichage 16.

A cet effet, l'angle α formé entre la surface externe 14 et la surface d'affichage du dispositif de génération d'image 10 est par exemple compris entre 30° et 60°, de préférence égal à 45°.

Selon un mode de réalisation, la deuxième partie 9 du corps 2 est mobile en rotation par rapport à la première partie 8 du corps 2 de façon à rendre l'angle α ajustable.

Selon l'invention, les images émises par le dispositif de génération d'images 10 sont donc visibles par un occupant du véhicule par réflexion de ces images sur la surface d'affichage 16 comme représenté sur la figure 1.

La position des images projetées sur la surface d'affichage 16 dépend de la position des images émises par le dispositif de génération d'images 10. En particulier, la position des images projetées sur la surface d'affichage 16 dépend de la position des images sur un écran du dispositif de génération d'images 10. Par exemple, une image est formée par une pluralité de pixels d'une zone de l'écran du dispositif de génération d'images 10, dont la position est connue. L'image est alors projetée sur une zone de la surface d'affichage 16, dont la position peut être déterminée à l'aide de la position connue de la pluralité de pixels formant l'image sur l'écran.

L'élément d'affichage 12 est par exemple une lame semi-réfléchissante.

La lame semi-réfléchissante est par exemple réalisée en matière pastique choisie parmi le poly méthacrylate de méthyle acrylique et le polycarbonate ou est réalisée en verre.

Tel que mentionné précédemment, l'élément d'affichage 12 est configuré pour réfléchir au moins en partie les rayons lumineux reçus du dispositif de génération d'images 10.

Par « configuré pour réfléchir » on entend qu'un rayon lumineux de longueur d'onde comprise entre 400 nm et 750 nm est en partie réfléchi par l'élément d'affichage 12, en particulier par la surface d'affichage 16, lorsqu'il frappe la surface externe 14 et/ou la surface interne 18 de l'élément d'affichage 12.

Dans un mode de réalisation, l'élément d'affichage 12 est au moins en partie translucide et/ou transparent.

Ainsi, lorsque le dispositif de génération d'images 10 est inactif ou éteint, la première partie 8 du corps 2 de l'élément de garnissage 1 est visible par un utilisateur à l'intérieur de l'habitacle du véhicule à travers l'élément d'affichage 12.

Par ailleurs, l'élément d'affichage 12 étant au moins en partie translucide et/ou transparent, au moins une partie des images projetées par le dispositif de génération d'images 10 et réfléchies par la surface d'affichage 16 se forme derrière la surface d'affichage 16, notamment entre la surface d'affichage 16 et la première partie 8 du corps 2, créant ainsi une image virtuelle. Ces images-là apparaissent donc comme flottantes pour l'utilisateur.

Dans une variante, l'élément d'affichage 12 est au moins partiellement opaque. Les images projetées par le dispositif de génération d'images 10 et réfléchies par la surface d'affichage 16 vers l'utilisateur se forment alors sur la surface d'affichage 16, et apparaissent comme « à plat » sur la surface d'affichage 16 pour l'utilisateur.

La deuxième partie 9 du corps 2 est par exemple agencée pour que le dispositif de génération d'images 10 ne soit pas visible directement des occupants du véhicule lorsqu'ils sont assis en regard de la surface d'affichage 16.

**Selon l'invention,** les images émises par le dispositif de génération d'images 10 ne sont donc pas visibles directement par l'oeil d'un utilisateur en position normale d'utilisation du véhicule.

Tel que mentionné précédemment, le dispositif de génération d'images 10 est agencé pour afficher des images sur ladite surface d'affichage 16 lorsque le dispositif de génération d'image 10 est activé ou allumé.

En particulier, le dispositif de génération d'image 10 peut être utilisé pour afficher des informations sur la conduite du véhicule (vitesse, jauge d'énergie, pictogramme de sécurité ...), sa géolocalisation, sur l'état de certaines fonctions du véhicule et/ou pour afficher un contenu audiovisuel ; dans la surface d'affichage 16.

Les images projetées par le dispositif de génération d'image 10 sont donc par exemple des images relatives aux informations sur la conduite du véhicule, sa géolocalisation, sur l'état de certaines fonctions du véhicule. En particulier, les images sont par exemple des icônes ou des pictogrammes représentatifs desdites informations liées au véhicule.

Le dispositif de génération d'images 10 est par exemple un écran éclairé par une pluralité de diodes électroluminescentes, ou encore est un écran à cristaux liquides.

Dans un mode de réalisation particulier, le dispositif de génération d'images 10 est apte à projeter au moins une image dynamique, dont les caractéristiques dépendent de caractéristiques relatives au fonctionnement du véhicule et/ou à l'utilisateur.

On entend par « image dynamique », une image animée formée par une succession d'images fixes formant une séquence, dont la forme, la luminosité, et/ou les dimensions sont modifiées entre les images successives de façon à créer une image en mouvement.

Un système électronique, non représenté, est apte à recueillir et utiliser des informations liées au fonctionnement du véhicule et/ou à l'utilisateur afin de contrôler la projection d'images du dispositif de génération d'images 10.

Par exemple, la position et/ou la dimension de l'image projetée sur la zone d'affichage 20 est modulable en temps réel par le dispositif de génération d'image 10 afin d'adapter l'image projetée aux conditions de circulation (vitesse du véhicule, état de la luminosité à l'extérieur et/ou à l'intérieur du véhicule, météo, etc...) et/ou à un état de l'utilisateur (fatigue, concentration, capacité visuelle, besoin spécifique etc...).

A titre d'exemple, lorsque le véhicule roule à grande vitesse, le dispositif de génération d'images 10 peut projeter une icône représentative d'une fonction à piloter du véhicule, agrandie, ce qui requière donc moins de concentration de la part de l'utilisateur qui souhaite piloter cette fonction par interaction avec l'icône sur la surface d'affichage 16.

De manière similaire, si l'utilisateur souhaite piloter certaines fonctions du véhicule par exemple liées à la gestion d'un multimédia, le dispositif de génération d'images 10 peut projeter des images et/ou des icônes représentatives des fonctions liées à la gestion d'un multimédia uniquement (fonction marche-arrêt, fonction précédent-suivant, fonction de gestion du volume, etc.). Cela facilite alors le pilotage des fonctions du véhicule pour l'utilisateur qui ne visualise et n'interagit qu'avec les icônes dont il a besoin en temps réel.

Ainsi, le système électronique permet d'une part aux icônes représentatives d'une fonction à piloter d'être rendues visibles (projetées sur la surface d'affichage 16) uniquement lorsque l'utilisateur souhaite piloter ladite fonction, et permet d'autre part aux icônes représentatives d'une fonction à piloter d'être adaptées aux conditions particulières de conduite et/ou à l'utilisateur.

L'interaction de l'utilisateur avec la surface d'affichage 16 est alors simplifiée et la charge cognitive de l'utilisateur est diminuée puisque les fonctions non utilisées demeurent invisibles et ne viennent pas envahir la surface d'affichage 16 inutilement.

Selon l'invention, l'élément de garnissage comprend au moins un capteur 25 agencé pour détecter un contact sur la surface d'affichage 16. Le capteur 25 est par exemple un capteur de force, tel qu'un transducteur piézoélectrique.

Dans l'exemple de la figure 1, chaque capteur 25 est disposé sur au moins une partie de la surface interne 18 de l'élément d'affichage 12, en particulier chaque capteur 25 est disposé en périphérie de la surface interne 18 de l'élément d'affichage 12.

Dans l'exemple représenté sur la figure 1, l'élément de garnissage 1 comprend au moins deux capteurs 25, chacun étant disposé en sur un bord périphérique opposé de la surface interne 18.

Ainsi, deux bandes périphériques 28 de la surface interne 18 sont dotées de capteurs 25 de force apte à détecter un contact sur la surface d'affichage 16.

Les deux bandes périphériques 28 de la surface interne 18 représentent par exemple entre 5% et 10% de la surface totale de la surface d'affichage 16.

En revanche, les capteurs 25 sont aptes à détecter et à localiser un contact sur la totalité de la surface d'affichage 16, et non pas uniquement sur les deux bandes périphériques 28 derrière lesquelles ils sont disposés.

La localisation d'un contact sur la surface d'affichage 16 par les capteurs 25 est effectuée par exemple par triangulation à partir de différents signaux reçus par les capteurs 25 en fonction de la force détectée par chaque capteur 25. Cette force dépend notamment de la localisation desdits capteurs 25 relativement au contact effectué sur la surface d'affichage 16.

A cet effet, l'élément d'affichage 12 est légèrement souple. Une vibration, causée par l'appui d'un utilisateur sur une zone locale de la surface d'affichage 16, est susceptible d'être détectée et localisée par les capteurs 25, rendant la totalité de surface d'affichage 16 tactile.

Ainsi, comme il sera décrit plus en détails ultérieurement, l'utilisateur peut interagir avec la surface d'affichage 16 tactile par contact afin de piloter certaines fonctions du véhicule.

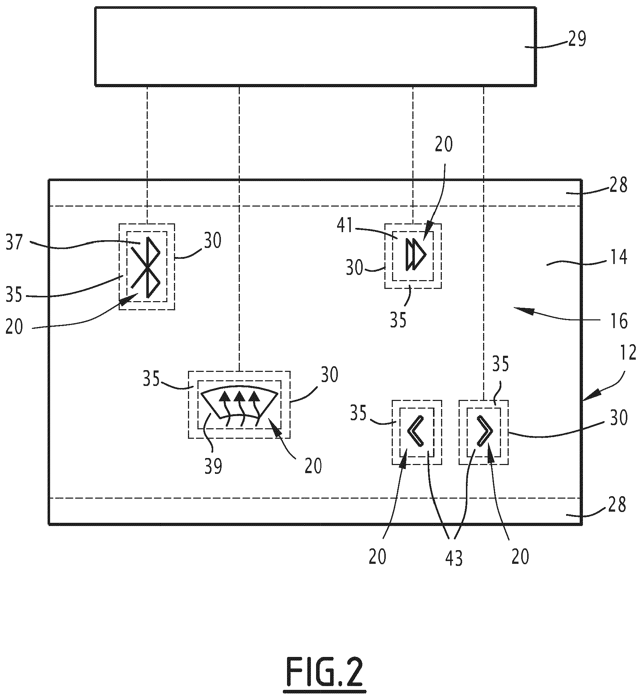

En référence à la figure 2, l'élément de garnissage 1 comprend un dispositif de commande 29, agencé pour rendre activable par contact une zone d'activation 30 de la surface d'affichage 16 pour le pilotage d'au moins une fonction du véhicule associée à l'image projetée sur la zone d'affichage 20.

Le dispositif de commande 29 est en outre agencé pour rendre inactivable par contact la surface d'affichage 16 en dehors de la zone d'activation 30.

Lorsque le capteur 25 détecte un contact sur la zone d'activation 30 comprenant ladite zone d'affichage 20, le dispositif de commande 29 pilote la fonction associée à l'image projetée sur la zone d'affichage 20.

On entend par « rendre activable par contact une zone d'activation 30 », que le dispositif de commande 29 pilote la fonction associée à l'image projetée uniquement si le contact détecté par le capteur 25 est localisé dans la zone d'activation 30.

De manière similaire, on entend par « rendre inactivable par contact la surface d'affichage 16 en dehors de la zone d'activation 30 », que le dispositif de commande 29 ne pilote pas la fonction associée à l'image projetée si le contact détecté par le capteur 25 est localisé hors de la zone d'activation 30.

Ainsi, la totalité de la surface d'affichage 16 est rendue tactile par les capteurs 25, mais seulement les zones d'activation 30 sont aptes à commander le pilotage d'une fonction par interaction avec l'utilisateur.

Dans un mode de réalisation particulier, représenté sur la figure 2, le dispositif de génération d'images 10 est agencé pour projeter une pluralités d'images sur des zones d'affichages 20 distinctes de la surface d'affichage 16. Par exemple, dans l'exemple représenté, le dispositif de génération d'images 10 est agencé pour projeter une icône 37 représentative d'une connexion Bluetooth avec un dispositif multimédia, une icône 39 représentative d'une fonction de dégivrage du parebrise, une icône 41 représentative d'une fonction de lecture d'un multimédia, et une icône 43 représentative d'une fonction précédent-suivant pour un ensemble de multimédia par exemple. Chaque icône 37, 39, 41 et 43 est projetée sur une zone d'affichage 20 distincte de la surface d'affichage 16.

Le dispositif de commande 29 est alors agencé pour rendre activable par contact une pluralité de zones d'activation 30 de la surface d'affichage 16 pour le pilotage des fonctions associées aux images projetées sur les zones d'affichage 20 distinctes.

En outre, dans ce mode de réalisation, le dispositif de commande 29 est agencé pour rendre inactivable par contact la surface d'affichage 16 en dehors de chaque zone d'activation 30.

En d'autre termes, tel que mentionné plus haut, la totalité de la surface d'affichage 16 est tactile, mais seuls les contacts de l'utilisateur sur les zones d'activation 30 peuvent mener au pilotage de ladite fonction. Ainsi, les zones d'activation 30 sont dites rendues activables par contact d'un utilisateur, car elles sont effectivement utilisables par l'utilisateur pour piloter la fonction.

Tel qu'illustré sur la figure 2, chaque zone d'activation 30 comprend selon l'invention la zone d'affichage 20 d'une image projetée par le dispositif de génération d'images 10 et une zone périphérique 35 entourant ladite zone d'affichage 20.

Les zones d'activation 30 (comprenant les zones d'affichage 20 et les zones périphériques 35) sont représentées en pointillés sur la figure 2.

La zone périphérique 35 présente par exemple une aire comprise entre 1,1 fois et 1,5 fois l'aire de la zone d'affichage 20 qu'elle entoure.

L'aire de la zone périphérique 35 dépend en temps réel de l'aire de la zone d'affichage 20, qui dépend elle-même de l'image projetée par le dispositif de génération d'images 10.

Chaque zone périphérique 35 tient alors compte d'un écart de précision entre la zone sur laquelle l'utilisateur appuie lorsqu'il souhaite piloter une fonction associée à une image projetée et affichée sur la zone d'affichage 20 et la zone d'affichage 20 elle-même.

Ainsi, l'utilisateur n'a pas à montrer une précision parfaite lorsqu'il souhaite piloter une fonction du véhicule.

Il peut en effet appuyer de manière légèrement décalée sur l'image associée à la fonction qu'il souhaite piloter, et par localisation de l'appui grâce aux capteurs 25, peut piloter ladite fonction si son appui se trouve dans la zone périphérique 35 déterminée par le dispositif de commande 29. Une telle caractéristique réduit donc la précision et la concentration demandée à l'utilisateur pour piloter une fonction du véhicule et facilite ainsi le pilotage des fonctions du véhicule pour l'utilisateur.

Cette fonctionnalité est particulièrement avantageuse lorsque l'utilisateur perçoit des images flottantes entre la surface d'affichage 16 et la première partie 8 du corps 2. En effet, la position des images affichées sur la surface d'affichage 16, lorsqu'elles apparaissent flottantes à l'utilisateur, ne peut pas être appréciée de façon précise par l'utilisateur. Ainsi, l'utilisateur souhaitant piloter une commande associée à une image lui apparaissant flottante, va par exemple appuyer sur la surface d'affichage 16 là où il perçoit l'image, et non là où l'image se trouve réellement. Ce manque de précision est alors prévu et compensé par le dispositif de commande 29, et en particulier par l'activation des zones périphériques 35, de manière à autoriser le pilotage de la fonction.

Le dispositif de commande 29 calcule par exemple la position de la zone d'activation 30 sur la surface d'affichage 16 en temps réel en fonction de la position, en temps réel, de l'image projetée sur la zone d'affichage 20 dans le dispositif de génération d'images 10.

En d'autres termes, le dispositif de commande 29 calcule la correspondance géographique entre un ou plusieurs pixel(s) sur le dispositif de génération d'images 10, comme décrit précédemment, et la ou leur projection sur la surface d'affichage 16 pour déterminer la zone d'affichage 20 et calcule par la suite la position et la dimension, en temps réel, de la zone périphérique 35 en fonction de la position et de la dimension, en temps réel, de la zone d'affichage 20.

La zone d'activation 30 dépend donc de la zone d'affichage 20 qu'elle comprend ainsi que de la zone périphérique 35 qui entoure la zone d'affichage 20.

La zone périphérique 35 étant modulée en temps réel en fonction de la zone d'affichage 20, et la zone d'affichage 20 dépendant de l'image projetée par le dispositif de génération d'images 10, la zone d'activation 30 est alors également modulable sur la surface d'affichage 16 en fonction de l'image projetée par le dispositif de génération d'images 10.

En d'autres termes, le nombre, la position et la dimension des zones d'activations sont variables dans le temps et offrent une surface d'affichage 16 adaptable pour l'utilisateur.

Dans le cas où le dispositif de génération d'images 10 est apte à projeter au moins une image dynamique, dont les caractéristiques dépendent de caractéristiques relatives au fonctionnement du véhicule et/ou à l'utilisateur, la zone d'activation 30 est elle aussi liée, par l'intermédiaire de la zone d'affichage 20, auxdites caractéristiques relatives au fonctionnement du véhicule et/ou à l'utilisateur.

Les calculs en temps réels réalisés par le dispositif de commande 29 afin de déterminer les zones d'affichage 20, les zones périphériques 35 et les zones d'activation 30, permettent d'adapter les zones d'activation 30 de la surface d'affichage 16 aux projections d'images par le dispositif de génération d'images 10.

Ceci permet d'obtenir une surface d'affichage 16 tactile modulable selon les configurations du véhicule et/ou selon les besoins de l'utilisateur.

Le dispositif de commande 29 est ensuite apte à déterminer si un utilisateur souhaite piloter une fonction spécifique associée à une image projetée sur la surface d'affichage 16 et à piloter ladite fonction, lorsque la position du contact d'un doigt de l'utilisateur sur la surface d'affichage 16, déterminée par les capteurs 25, par exemple par triangulation, correspond à la position d'une zone d'activation 30.

Dans un exemple de réalisation, représenté sur la figure 1, l'élément de garnissage 1 comprend au moins un masque 50 opaque disposé au moins entre chaque capteur 25 et l'élément d'affichage 12, en regard des capteurs 25.

En particulier, chaque masque 50 est disposé entre chaque capteur 25 et la surface interne 18 de l'élément d'affichage 12.

En variante, l'élément de garnissage 1 comprend un masque 50 unique, disposé au moins entre chaque capteur 25 et la surface interne 18 de l'élément d'affichage 12.

Le ou les masques 50 sont agencés pour occulter les capteurs 25 depuis l'extérieur de l'élément de garnissage 1. Ainsi, l'aspect de l'élément d'affichage 12 n'est pas altéré par la présence des capteurs 25. Dans un mode de réalisation particulier, le ou les masques 50 sont disposés au niveau d'une interface technique, notamment au niveau de l'interface de fixation de l'élément d'affichage 12, permettant ainsi de dissimuler cette interface technique à l'utilisateur.

En outre, le ou les masques 50 étant opaques, ils permettent d'améliorer le contraste des images projetées par le dispositif de génération d'images 10 et réfléchies par la ou les partie(s) de la surface d'affichage 16 se trouvant en regard des masques 50.

Un procédé d'utilisation d'un tel élément de garnissage 1 va maintenant être décrit en détails.

Le procédé comprend une première étape d'activation du dispositif de génération d'images 10 et de projection d'au moins une image par le dispositif de génération d'image 10 sur au moins une zone d'affichage 20 de la surface d'affichage 16.

Tel que décrit précédemment, le dispositif de génération d'images 10 peut être utilisé pour afficher des informations sur la conduite du véhicule (vitesse, niveau de carburant, pictogramme de sécurité ...), sa géolocalisation, sur l'état de certaines fonctions du véhicule (ventilation, dégivrage, ...) et/ou pour afficher un contenu audiovisuel.

Le dispositif de commande 29 calcule alors la position de la zone d'activation 30 sur la surface d'affichage 16 en fonction de la position de l'image projetée sur la zone d'affichage 20 dans le dispositif de génération d'image 10.

En d'autres termes, à cette étape, le dispositif de commande 29 détermine les régions de la surface d'affichage 16 qui seront activables par contact dans la suite, c'est-à-dire les régions qui pourront effectivement mener au pilotage de la fonction associée à l'image projetée.

Une fois la zone d'activation 30 déterminée, le dispositif de commande 29 active ladite zone d'activation 30, et désactive la surface d'affichage 16 en dehors de la ou chaque zone d'activation 30.

En d'autres termes, à cette étape, le dispositif de commande 29 filtre les informations reçues par les capteurs 25 selon la localisation des appuis détectés par les capteurs 25 sur la surface d'affichage 16 (dans les zones d'activation 30 ou en dehors des zones d'activation 30). Seuls les appuis détectés par les capteurs 25 dans la zone d'activation 30 seront pris en compte par le dispositif de commande 29 afin de piloter la fonction associée, la zone d'activation 30 est dite active, tandis que la surface d'affichage 16 en dehors de la zone d'activation 30 est dite inactive.

Enfin, lorsque le capteur 25 détecte un contact sur une zone d'activation 30, le dispositif de commande 29 pilote la fonction associée à l'image projetée sur la zone d'affichage 20 comprise dans ladite zone d'activation 30.

L'élément de garnissage 1 selon l'invention présente de nombreux avantages.

Le dispositif de commande 29 étant apte à rendre activable par contact une ou plusieurs zones d'activations sur la surface d'affichage en fonction des images projetées par le dispositif de génération d'image, et de rendre inactivable par contact le reste de la surface d'affichage, il est possible d'obtenir une surface d'affichage tactile modulable en fonction des besoins courants de l'utilisateur.

Ainsi, en fonction par exemple de la configuration du véhicule, les icônes projetées sur la surface d'affichage 16 présentent des dimensions et/ou positions sur la surface d'affichage 16 modulables et adaptables dans le temps.

Le pilotage des fonctions du véhicule par l'utilisateur est alors simplifié, et permet à l'utilisateur de réduire la charge cognitive impliquée par le pilotage des fonctions du véhicule.

Par ailleurs, les zones d'activation 30 étant des zones élargies par rapport à la zone d'affichage 20 (car comprenant la zone périphérique 35), il est possible pour l'utilisateur de réduire la concentration et précision nécessaire lorsqu'il souhaite piloter une fonction. L'utilisateur peut en effet appuyer légèrement autour de la zone d'affichage 20 et tout de même réussir à piloter la fonction désirée.

Ceci est notamment avantageux lorsque l'utilisateur perçoit des images flottantes dont la position sur la surface d'affichage ne peut pas être appréciée de façon précise par l'utilisateur.

En effet, chaque zone périphérique tenant compte d'un écart de précision entre la zone sur laquelle l'utilisateur appuie lorsqu'il souhaite piloter une fonction associée à une image projetée et affichée sur la zone d'affichage et la zone d'affichage elle-même, l'utilisateur n'a pas à montrer une précision parfaite lorsqu'il souhaite piloter une fonction du véhicule.

Ainsi, l'utilisateur souhaitant piloter une commande associée à une image lui apparaissant flottante, va par exemple appuyer sur la surface d'affichage là où il perçoit l'image, et non là où l'image se trouve réellement. Ce manque de précision est alors prévu et compensé par le dispositif de commande, et en particulier par l'activation des zones périphériques, afin d'autoriser le pilotage de la fonction désirée.

En outre, les zones d'activation 30 étant des zones locales de la surface d'affichage 16 et la surface d'affichage 16 étant inactivée en dehors des zones d'activation 30, le risque que l'utilisateur se trompe de fonction à piloter par un manque de précision lors d'un appui sur la surface d'affichage 16 est minimisé.

L'interaction avec la surface d'affichage 16 est alors simplifiée pour l'utilisateur qui peut concentrer son attention sur la route ou sur la conduite.

## Revendications

1. Elément de garnissage (1) de véhicule comprenant au moins un dispositif de génération d'images (10), au moins un élément d'affichage (12) définissant au moins une surface d'affichage (16), et au moins un capteur (25) agencé pour détecter un contact sur la surface d'affichage (16), le dispositif de génération d'images (10) étant agencé pour projeter au moins une image sur au moins une zone d'affichage (20) de la surface d'affichage (16),
**caractérisé en ce que** l'élément de garnissage (1) comprend un dispositif de commande (29) agencé pour rendre activable par contact une zone d'activation (30) de la surface d'affichage (16) pour le pilotage d'au moins une fonction associée à l'image projetée sur la zone d'affichage (20), la zone d'activation (30) comprenant au moins la zone d'affichage (20), le capteur (25) étant agencé hors de la zone d'affichage (20), le dispositif de commande (29) étant en outre agencé pour rendre inactivable par contact la surface d'affichage (16) en dehors de la zone d'activation (30),
le dispositif de commande (29) pilotant la fonction associée à l'image projetée sur la zone d'affichage (20) lorsque le capteur (25) détecte un contact sur la zone d'activation (30) comprenant ladite zone d'affichage (20).

2. Elément de garnissage (1) selon la revendication 1, dans lequel la zone d'activation (30) comprend également une zone périphérique (35) entourant la zone d'affichage (20), la zone périphérique (35) présentant par exemple une aire comprise entre 1,1 fois et 1,5 fois l'aire de la zone d'affichage (20) qu'elle entoure.

3. Elément de garnissage (1) selon la revendication 1 ou 2, dans lequel le dispositif de génération d'images (10) est agencé pour projeter une pluralités d'images sur des zones d'affichages (20) distinctes de la surface d'affichage (16), le dispositif de commande (29) étant agencé pour rendre activable par contact une pluralité de zones d'activation (30) de la surface d'affichage (16) pour le pilotage de fonctions associées aux images projetées sur les zones d'affichage (20) distinctes, le dispositif de commande (29) étant en outre agencé pour rendre inactivable par contact la surface d'affichage (16) en dehors de chaque zone d'activation (30).

4. Elément de garnissage (1) selon l'une quelconque des revendications précédentes, dans lequel le dispositif de commande (29) calcule la position de la zone d'activation (30) sur la surface d'affichage (16) en fonction de la position de l'image générée sur un écran du dispositif de génération d'image (10).

5. Elément de garnissage (1) selon l'une quelconque des revendications précédentes, dans lequel l'élément d'affichage (12) présente une surface externe (14) définissant la surface d'affichage (16) et une surface interne (18) opposée à la surface externe (14), le capteur (25) étant disposé sur au moins une partie de la surface interne (18) de l'élément d'affichage (12).

6. Elément de garnissage (1) selon la revendication 5, dans lequel le capteur (25) est disposé en périphérie de la surface interne (18) de l'élément d'affichage (12).

7. Elément de garnissage (1) selon la revendication 5 ou 6, dans lequel la partie de la surface interne (18) de l'élément d'affichage (12) recevant le capteur (25) représente entre 5 % et 10 % de la surface totale de la surface d'affichage (16).

8. Elément de garnissage (1) selon l'une quelconque des revendications précédentes, dans lequel l'élément de garnissage (1) comprend un masque opaque (50) disposé entre le capteur (25) et l'élément d'affichage (12), au moins en regard du capteur (25), le masque (50) étant agencé pour occulter le capteur (25) depuis l'extérieur de l'élément de garnissage (1).

9. Elément de garnissage (1) selon l'une quelconque des revendications précédentes, dans lequel le dispositif de génération d'image (10) est apte à projeter au moins une image dynamique, dont les caractéristiques dépendent de caractéristiques relatives au fonctionnement du véhicule et/ou à l'utilisateur, la zone d'activation (30) étant liée, par la zone d'affichage (20), auxdites caractéristiques relatives au fonctionnement du véhicule et/ou à l'utilisateur.

10. Elément de garnissage (1) selon l'une quelconque des revendications précédentes, dans lequel l'élément d'affichage (12) est une lame semi-réfléchissante au moins en partie translucide, au moins une partie des images projetées par le dispositif de génération d'images (10) et réfléchies par la surface d'affichage (16) se formant derrière la surface d'affichage (16), sous forme d'image virtuelle.

## Patentansprüche

1. Fahrzeugverkleidungselement (1), umfassend mindestens eine bilderzeugende Vorrichtung (10), mindestens ein Anzeigeelement (12), das mindestens eine Anzeigeoberfläche (16) definiert, und mindestens einen Sensor (25), der konzipiert ist, um einen Kontakt auf der Anzeigeoberfläche (16) zu erfassen, wobei die bilderzeugende Vorrichtung (10) konzipiert ist, um mindestens ein Bild auf mindestens eine Anzeigezone (20) der Anzeigeoberfläche (16) zu projizieren,
**dadurch gekennzeichnet, dass** das Verkleidungselement (1) eine Steuervorrichtung (29) umfasst, die konzipiert ist, um eine Aktivierungszone (30) der Anzeigeoberfläche (16) kontaktaktivierbar zu machen, zum Steuern mindestens einer Funktion, die dem Bild, das auf die Anzeigezone (20) projiziert wird, zugeordnet ist, die Aktivierungszone (30) umfassend mindestens die Anzeigezone (20), wobei der Sensor (25) außerhalb der Anzeigezone (20) angeordnet ist, wobei die Steuervorrichtung (29) ferner konzipiert ist, um die Anzeigeoberfläche (16) außerhalb der Aktivierungszone (30) kontaktinaktivierbar zu machen,
die Steuervorrichtung (29) die Funktion steuert, die dem Bild, das auf die Anzeigezone (20) projiziert wird, zugeordnet ist, wenn der Sensor (25) einen Kontakt auf der Aktivierungszone (30) erfasst, umfassend die Anzeigezone (20).

2. Verkleidungselement (1) nach Anspruch 1, wobei die Aktivierungszone (30) auch eine Umfangszone (35) umfasst, die die Anzeigezone (20) umgibt, wobei die Umfangszone (35) zum Beispiel eine Oberfläche zwischen dem 1,1- und 1,5-Fachen des Oberflächenbereichs der von ihr umgebenen Anzeigezone (20) aufweist.

3. Verkleidungselement (1) nach Anspruch 1 oder 2, wobei die Bilderzeugungsvorrichtung (10) konzipiert ist, um eine Vielzahl von Bildern auf unterschiedlichen Anzeigezonen (20) der Anzeigeoberfläche (16) zu projizieren, wobei die Steuervorrichtung (29) konzipiert ist, um eine Vielzahl von Aktivierungszonen (30) der Anzeigeoberfläche (16) zum Steuern von Funktionen, die den Bildern, die auf die unterschiedlichen Anzeigezonen (20) projiziert werden, zugeordnet sind, kontaktaktivierbar zu machen, wobei die Steuervorrichtung (29) ferner konzipiert ist, um die Anzeigeoberfläche (16) außerhalb jeder Aktivierungszone (30) kontaktinaktivierbar zu machen.

4. Verkleidungselement (1) nach einem der vorstehenden Ansprüche, wobei die Steuervorrichtung (29) die Position der Aktivierungszone (30) auf der Anzeigeoberfläche (16) als Funktion der Position des auf einem Bildschirm der bilderzeugenden Vorrichtung (10) erzeugten Bildes berechnet.

5. Verkleidungselement (1) nach einem der vorstehenden Ansprüche, wobei das Anzeigeelement (12) eine Außenoberfläche (14), die die Anzeigeoberfläche (16) definiert, und eine der Außenoberfläche (14) gegenüberliegende Innenoberfläche (18) aufweist, wobei der Sensor (25) auf mindestens einem Abschnitt der Innenoberfläche (18) des Anzeigeelements (12) positioniert ist.

6. Verkleidungselement (1) nach Anspruch 5, wobei der Sensor (25) an dem Umfang der Innenoberfläche (18) des Anzeigeelements (12) positioniert ist.

7. Verkleidungselement (1) nach Anspruch 5 oder 6, wobei der Abschnitt der Innenoberfläche (18) des Anzeigeelements (12), der den Sensor (25) aufnimmt, zwischen 5 % und 10 % der gesamten Oberfläche der Anzeigeoberfläche (16) ausmacht.

8. Verkleidungselement (1) nach einem der vorstehenden Ansprüche, wobei das Verkleidungselement (1) eine undurchsichtigen Maske (50) umfasst, die zwischen dem Sensor (25) und dem Anzeigeelement (12), mindestens dem Sensor (25) zugewandt positioniert ist, wobei die Maske (50) konzipiert ist, um den Sensor (25) von außerhalb des Verkleidungselements (1) zu verbergen.

9. Verkleidungselement (1) nach einem der vorstehenden Ansprüche, wobei die Bilderzeugungsvorrichtung (10) zum Projizieren mindestens eines dynamischen Bilds geeignet ist, dessen Eigenschaften von Eigenschaften in Bezug auf den Betrieb des Fahrzeugs und/oder den Benutzer abhängen, wobei die Aktivierungszone (30) über die Anzeigezone (20) mit den Eigenschaften in Bezug auf den Betrieb des Fahrzeugs und/oder den Benutzer verknüpft ist.

10. Verkleidungselement (1) nach einem der vorstehenden Ansprüche, wobei das Anzeigeelement (12) eine mindestens teilweise lichtdurchlässige, halbreflektierende Platte ist, wobei sich mindestens einige der Bilder, die von der Bilderzeugungsvorrichtung (10) projiziert werden und von der Anzeigeoberfläche (16) reflektiert werden, hinter der Anzeigeoberfläche (16) als virtuelles Bild ausbilden.

## Claims

1. A vehicle trim element (1) comprising at least one image-generating device (10), at least one display element (12) defining at least one display surface (16), and at least one sensor (25) designed to detect contact on the display surface (16), the image-generating device (10) being designed to project at least one image onto at least one display zone (20) of the display surface (16),
**characterized in that** the trim element (1) comprises a control device (29) designed to render contact-activatable an activation zone (30) of the display surface (16) for controlling at least one function associated with the image projected onto the display zone (20), the activation zone (30) comprising at least the display zone (20), the sensor (25) being arranged outside the display zone (20), the control device (29) being further designed to render contact-inactivatable the display surface (16) outside the activation zone (30),
the control device (29) controlling the function associated with the image projected onto the display zone (20) when the sensor (25) detects contact on the activation zone (30) comprising said display zone (20).

2. The trim element (1) according to claim 1, wherein the activation zone (30) also comprises a peripheral zone (35) surrounding the display zone (20), the peripheral zone (35) having for example a surface area of between 1.1 and 1.5 times the surface area of the display zone (20) it surrounds.

3. The trim element (1) according to claim 1 or 2, wherein the image-generating device (10) is designed to project a plurality of images onto distinct display zones (20) of the display surface (16), the control device (29) being designed to render contact-activatable a plurality of activation zones (30) of the display surface (16) for controlling functions associated with the images projected onto the distinct display zones (20), the control device (29) being further designed to render contact-inactivatable the display surface (16) outside each activation zone (30).

4. The trim element (1) according to any of the preceding claims, wherein the control device (29) calculates the position of the activation zone (30) on the display surface (16) as a function of the position of the image generated on a screen of the image-generating device (10).

5. The trim element (1) according to any of the preceding claims, wherein the display element (12) has an outer surface (14) defining the display surface (16) and an inner surface (18) opposite the outer surface (14), the sensor (25) being positioned on at least a portion of the inner surface (18) of the display element (12).

6. The trim element (1) according to claim 5, wherein the sensor (25) is positioned at the periphery of the inner surface (18) of the display element (12).

7. The trim element (1) according to claim 5 or 6, wherein the portion of the inner surface (18) of the display element (12) receiving the sensor (25) represents between 5% and 10% of the total surface of the display surface (16).

8. The trim element (1) according to any of the preceding claims, wherein the trim element (1) comprises an opaque mask (50) positioned between the sensor (25) and the display element (12), at least facing the sensor (25), the mask (50) being designed to conceal the sensor (25) from outside the trim element (1).

9. The trim element (1) according to any of the preceding claims, wherein the image-generating device (10) is suitable for projecting at least one dynamic image, the characteristics of which depend on characteristics relating to the operation of the vehicle and/or the user, the activation zone (30) being linked, via the display zone (20), to said characteristics relating to the operation of the vehicle and/or the user.

10. The trim element (1) according to any of the preceding claims, wherein the display element (12) is an at least partly translucent semi-reflective plate, at least some of the images projected by the image-generating device (10) and reflected by the display surface (16) forming behind the display surface (16) as a virtual image.
